# NEW EUROPEAN PATENT SPECIFICATION

(11) **EP 0 924 977 B2**
(45) Date of publication and mention of the opposition decision: **13.09.2006**
(45) Mention of the grant of the patent: 15.01.2003
(21) Application number: 97940154.4
(22) Date of filing: 02.09.1997
(51) Int. Cl.: A01C 17/00

(54) **A MACHINE FOR SPREADING MATERIALS IN GRANULAR AND/OR POWDER FORM, PARTICULARLY FERTILIZERS**
STREUER FÜR KÖRNIGES ODER/UND PULVERIGES GUT INSBESONDERES DÜNGER
MACHINE POUR EPANDRE DES MATERIAUX SOUS FORME GRANULAIRE ET/OU PULVERULENTE, PARTICULIEREMENT, DES ENGRAIS

(30) Priority: 09.09.1996 IT PD960217
(43) Date of publication of application: 30.06.1999
(73) Proprietor: Agrex S.p.A., 35010 Curtarolo (IT)
(72) Inventor: BARBIERI, Silvano, I-35010 Curtarolo (IT)
(74) Representative: Cantaluppi, Stefano
(86) International application number: PCT/EP1997/004775
(87) International publication number: WO 1998/009494

(56) References cited:
- EP-A- 0 327 941
- EP-A- 0 379 103
- DE-A- 3 511 240
- DE-A- 3 702 139
- DE-A- 3 911 583
- DE-A- 4 302 802
- DE-B- 1 217 127
- DE-PS- 26 063
- FR-A- 621 096
- FR-A- 1 134 277
- FR-A- 1 178 177
- US-A- 2 687 307
- US-A- 2 754 032

## Description

### Technical field

The present invention relates to a machine for spreading materials in granular and/or powder form, according to the premble of claim 1.

The invention was devised for use in the spreading of fertilizer. However, it is not limited to this use and may equally well be used in the spreading of salt, sand, rice, seeds and other mineral and chemical products, generally in granular or powder form.

### Background art

Machines having the characteristics indicated above are known in the specific field of land fertilization by the term "manure spreaders".

In these machines, the spreading device generally comprises a pair of disks which are rotated in opposite directions about parallel axes and onto which the fertilizer supplied from the hopper falls. The fertilizer is thus spread on the ground by the centrifugal effect caused by rapid rotation of the disks. Each disk also generally has one or more spreader blades.

In use, amongst the main requirements of spreading devices of the type indicated is that of ensuring maximum homogeneity, uniformity and evenness of the distribution of the fertilizer on the ground treated. These characteristics normally mean ensuring a predetermined dosage of fertilizer per unit of area, which has to be kept as constant as possible over the entire working width affected by the spreading. In particular, these spreading characteristics have to be ensured in the overlapping zones, that is, the zones which extend beside the working area of the spreading device and are subject to the spreading of fertilizer during both the outward and the return journey of the machine over the plot of land to be treated.

German patent application No. 4206301 describes a pivotable chute fitted on the bottom of the hopper for diverting at least some of the flow of material delivered by the hopper. This device serves for regulating the uniformity of spreading but has the disadvantage of achieving too coarse a regulation to ensure effective homogeneity of spreading.

### Disclosure of the invention

The problem upon which the present invention is based is that of providing a machine for spreading granular materials which is designed structurally and functionally to overcome all of the problems complained of with reference to the prior art cited.

FR-A-1134277, DE-A-1217127 and EP-A-0379103 are also prior art to the present invention.

This problem is solved according to the invention by a machine formed in accordance with the following claims.

### Brief description of drawings

The characteristics and advantages of the invention will become clearer from the detailed description of a preferred embodiment thereof, described by way of non-limiting example with reference to the appended drawings, in which:
Figure 1 is a partial perspective view of a machine formed in accordance with the present invention,
Figure 2 is a partially-sectioned, side elevational view of the machine of Figure 1,
Figure 3 is a partially-sectioned plan view of the machine of the preceding drawings,
Figures 4 and 5 show details of the machine of the preceding drawings, on an enlarged scale,

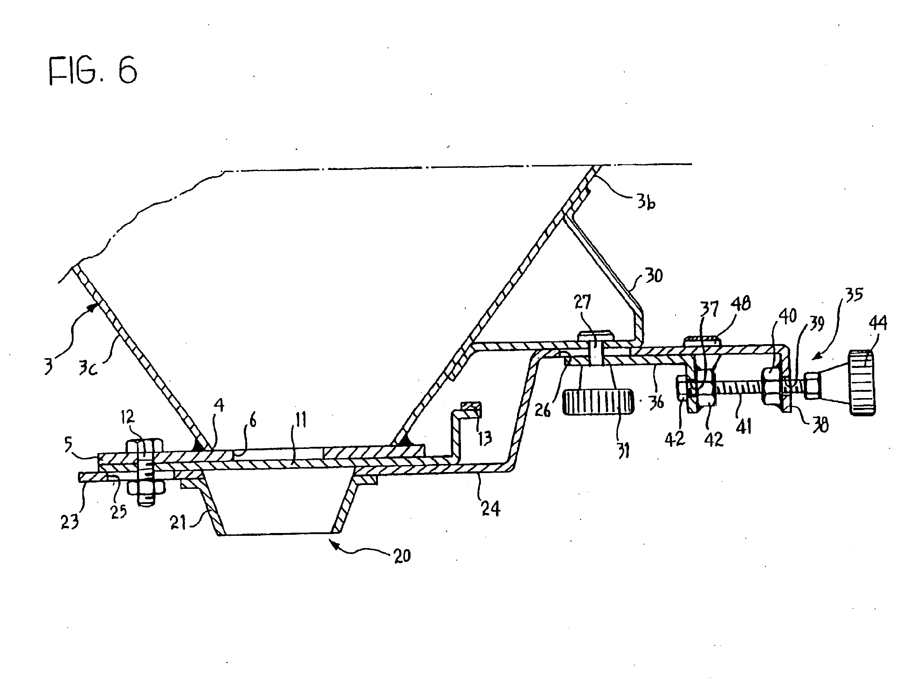

Figure 6 is a sectioned view of a detail of the machine of Figure 1,
Figures 7 and 8 are two fertilizer-distribution graphs.

### Best mode of carrying out the invention

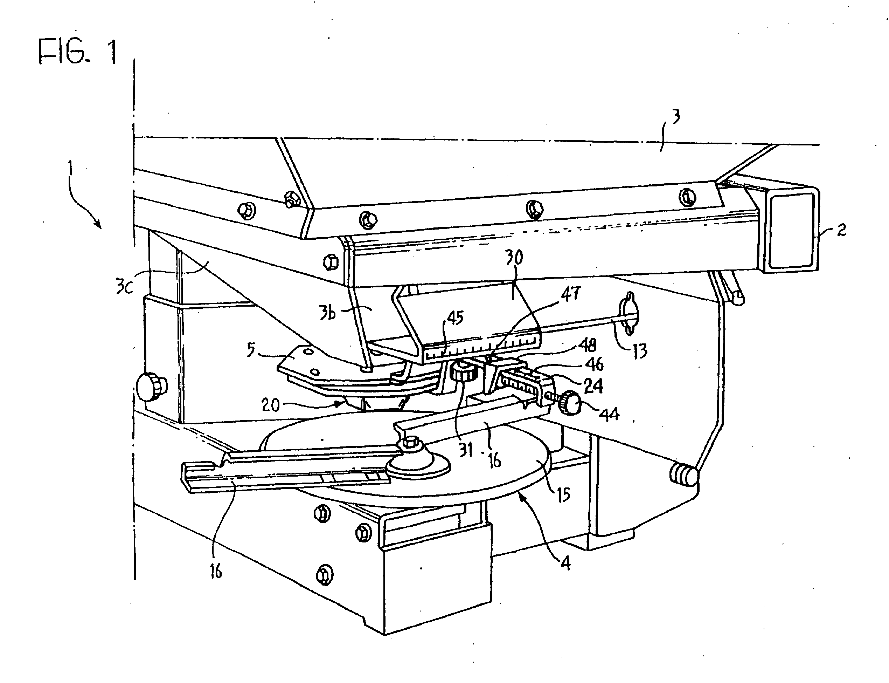

In Figure 1, a machine formed in accordance with the present invention for spreading materials in granular and/or powder form, particularly fertilizers, is generally indicated 1.

The machine 1 comprises a load-bearing structure 2 mounted on which are a hopper 3 for holding the fertilizer and a centrifugal spreading device 4 for spreading the fertilizer on the ground during the forward movement of the machine 1. The load-bearing structure 2 is provided with coupling elements, typically a three-point coupling, not shown, for coupling to a tractor or to a trailer.

The hopper 3 comprises walls 3a-3d which are inclined so as to converge towards a base 3e of the hopper, closed by a plate 5. The plate 5 has a through-hole 6 constituting an outlet for the fertilizer held in the hopper 3. Inside the hopper 3 there is a stirrer 7 disposed adjacent the base 3e and rotated by means of a drive shaft 8.

Grids mounted inside the hopper 3 are indicated 9.

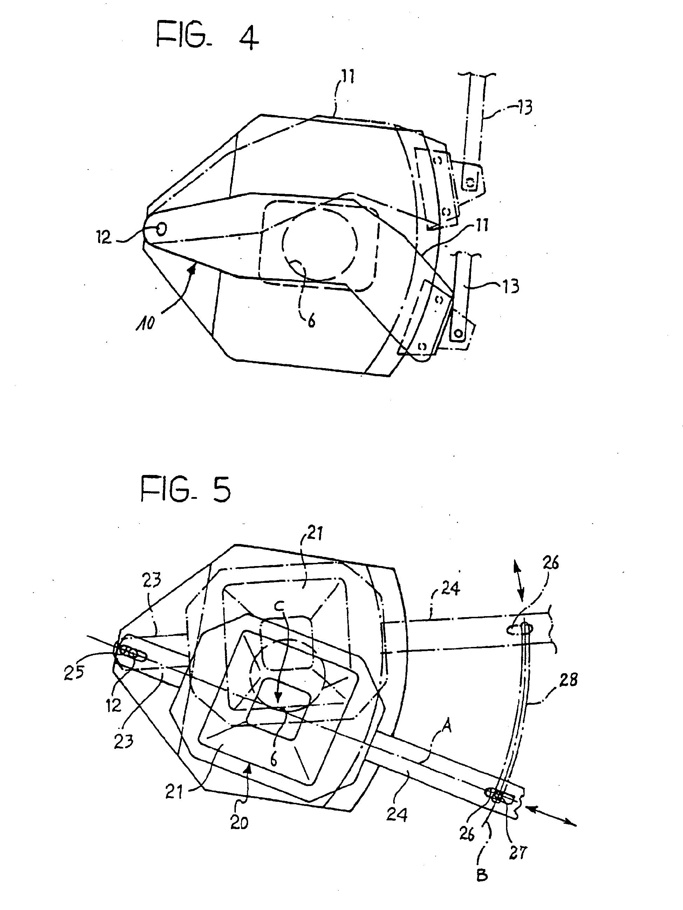

The machine 1 also comprises a device 10 for metering the flow of granular material discharged from the hopper 3 by falling. The metering device 10 comprises a substantially plate-shaped shutter 11 disposed against the plate 5. One end ofthe shutter 11 is mounted for pivoting on the plate 5 by means of a screw or pin 12 and its opposite end is articulated to a control rod 13. The shutter 11 is movable angularly in an adjustable manner by means of the rod 13 between a first position (shown in solid outline in Figure 4), in which the hole 6 in the hopper is completely shut off by the shutter, and a second position (shown in broken outline in Figure 4), in which the shutterdoes not shut off the hole 6, enabling the maximum flow of material to be delivered from the hopper 3.

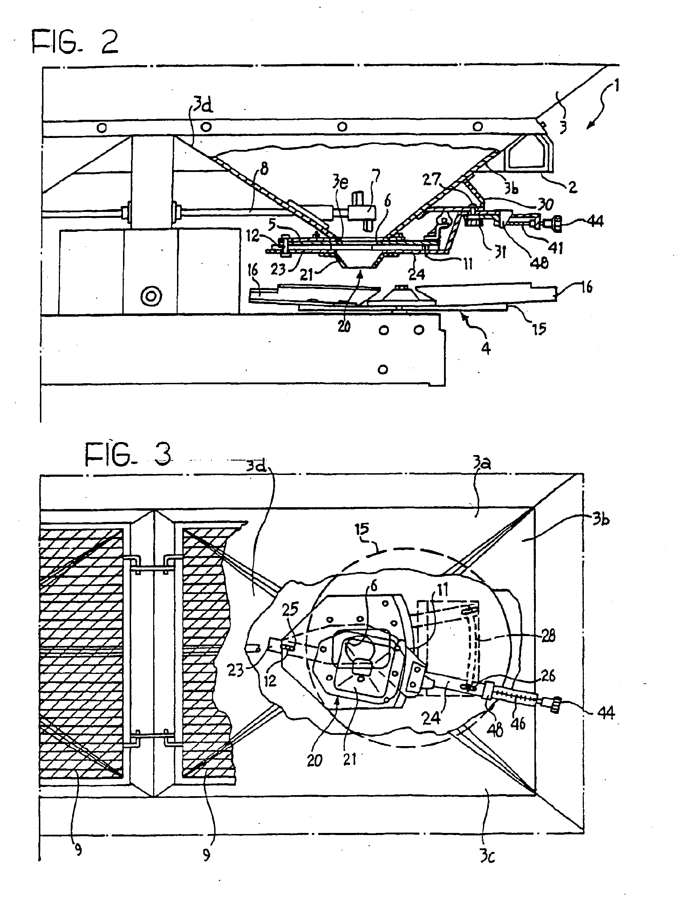

The spreading device 4 is mounted beneath the hopper 3 and comprises a pair of spreading disks 15 rotated in opposite directions about their respective axes. Only one of the spreading disks 15 is shown in Figures 1 to 3 but the machine 1 is intended to be equipped with a pair of identical disks 15, only one of which will be described below.

The disk 15 is offset from the axis of the hole 6 and is mounted in a position such as to be struck by the fertilizer supplied by falling from the hopper 3. The fertilizer is thus spread on the ground as a result of the centrifugal effect brought about by the rotation of the disk 15. The disk 15 also has spreading blades 16 for guiding the granules of fertilizer on the trajectory on which they are expelled by the disc and thus ensuring more precise and uniform spreading.

An outlet, generally indicated 20, for the fertilizer discharged from the hopper 3 is interposed between the base 3e of the hopper and the disk 15. The outlet 20 comprises a second, frusto-conical hopper 21 for collecting all of the material supplied by falling from the holding hopper 3. The second hopper 21 is fixed to a first support element including a first and a second bracket, indicated 23, 24, respectively. A first slot 25 is formed in the free end of the bracket 23 and the screw 12 is housed with clearance therein. The second bracket 24 has a second slot 26 which is of the same length as the slot 25 and is elongate in alignment with the slot 25 along an axis indicated A in Figure 5. The slot26 houses with clearance a pin 27 which in turn is housed in a third arcuate slot 28 formed in a second support element 30 fixed to the hopper 3. The slot 28 extends along an arc indicated B in Figure 5, centred on the axis of the pin 12. The axis A is selected in a manner such as to be substantially radial relative to the arc B. In accordance with this structure, the outlet 20 is movable by means of the brackets 23, 24 along the axis A with the travel permitted by the length of the slots 25, 26 and, at the same time, is pivotable about the axis of the pin 12 with the angular travel permitted by the length of the arcuate slot 28. The combination of the movements along the axes A and B, which belong to a system of polar coordinates, thus enables the outlet 20 to be moved along intersecting axes relative to the disk 15 so as to vary selectively, relative to the disk 15, the position, indicated C in Figure 5, in which the material falls. The position C in which the material falls can thus be selected within a surface area of the disk 15 defined by the travel permitted by the slots 25, 26 and 28.

It should be noted that the second hopper 21 has dimensions such that it collects all of the material supplied from the holding hopper 3 in every adjustment position of the outlet 20 relative to the spreading disk 15.

According to a preferred embodiment of the invention, the travel permitted by the length of the slots 25 and 26 is about 40 mm and the angular travel permitted by the slot 28 is about 20°. In Figure 5, the outlet 20 is shown in the limit positions imposed by the length ofthe slot 28 (in solid outline and broken outline, respectively) for a preselected positioning along the axis A.

A knob 31, screwed onto the pin 27 in order to clamp the bracket 24 against the support element 30, is provided for locking the sliding and pivoting of the brackets 23, 24 and consequently of the outlet 20 relative to the hopper 3 once the preselected adjustment position has been reached.

According to a further characteristic of the invention, the outlet 20 is movable along the axis A by actuator means, generally indicated 35. The actuator means 35 comprise an L-shaped section 36 of which one flange is disposed against the bracket 24 and pivotable on the pin 27 and the other flange has a through-hole 37. The free end of the bracket 24 has an appendage 38 with a through-hole 39 coaxial with the hole 37. A nut 40 is fixed to the appendage 38 and is engaged by screwing on a threaded rod 41. The rod 41 is housed with radial clearance in the hole 37 and is damped axially relative to the section 36 by means of a pair of nuts indicated 42. A knob 44 is screwed onto one end of the rod 41. Rotation of the knob 41 causes relative sliding between the section 36 and the bracket 24 and consequently movement of the outlet along the radial axis A.

Graduated scales 45, 46 with corresponding indicators 47, 48, are provided for reading of the displacement travel ofthe outlet20 along the axes A and B.

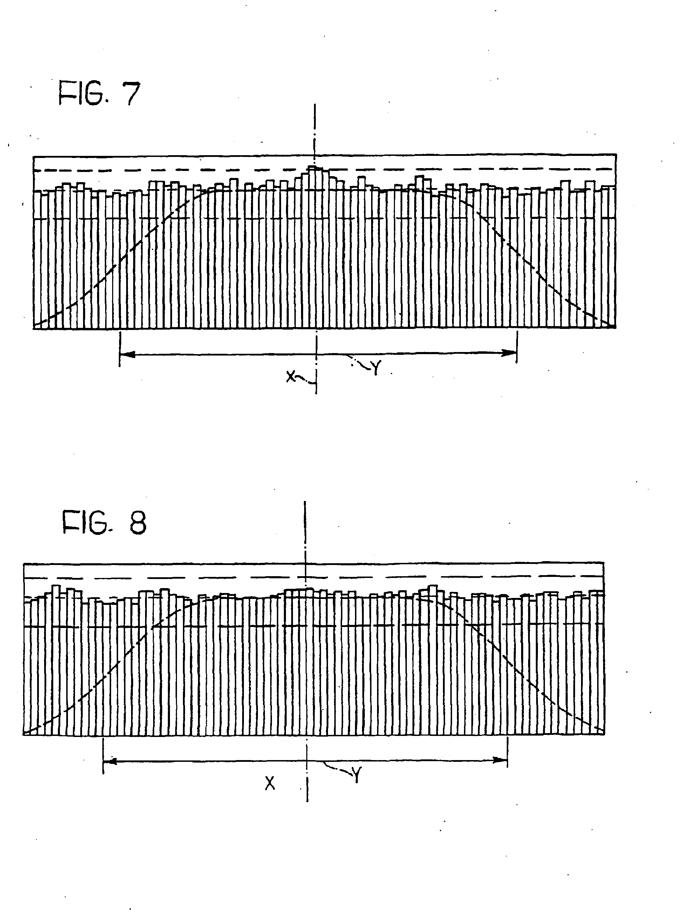

Figures 7 and 8 are two graphs of fertilizer distribution in the form of histograms produced during two spreading tests carried out with the machine of the present invention. The distances on the ground from the axis of the machine, indicated X, are given on the abscissa. The working width of the machine, corresponding to the spreading width, is indicated Y. The quantities of fertilizer per unit of area treated achieved by the spreading at predetermined Intervals within the spreading width Y are given on the ordinate.

The graph of Figure 8 was obtained with an adjustment of the position C in which the fertilizer falls onto the spreading device disk 15 achieved by movement of the outlet 20 along the axes A and B of Figure 5. The greater evenness of spreading in terms of uniformity of dosage of fertilizer per unit of area in comparison with the curve of graph 7 which, on the other hand, was obtained without any adjustment of the falling position C as described above can be seen. In particular, the uniformity of the distribution curve in the region of the axis of the machine X, that is, in the overlapping zone in which the contributions of both spreading disks 15 to the spreading of the fertilize are added together, can be seen.

It should be noted that the adjustment which can be achieved with the machine of the invention in the point at which the material falls also achieves uniform and homogeneous spreading with granular materials of different particle size and specific weight.

For use by the final user, it is envisaged that the machine 1 will be equipped with tables for the correction of the position of the point at which the fertilizer falls in dependence on dosage values detected by the user, enabling the maximum possible uniformity and homogeneity of spreading to be achieved.

## Claims

1. A machine for spreading materials in granular and/or powder form, particularly fertilizers, of the type comprising a hopper (3) for holding the material to spread, including an outlet (20) for the material and at least one centrifugal spreading device (4) mounted beneath the hopper (3), the outlet (20) being movable relative to the spreading device (4) in order to vary the position in which the material falls onto the spreading device (4) and consequently to adjust the parameters of the spreading of the material, the outlet (20) being movable relative to the spreading device along at least two intersecting axes (A, B), outlet positioning means being provided for moving the outlet (20) along said at least two axes (A, B), screw actuator means being operatively connected to said outlet-positioning means for moving said outlet along at least one of said axes (A, B) by rotation of said screw actuator means, **characterized in that** the axes (A, B) belong to a system of polar coordinates, said screw actuator means are operatively connected to said outlet-positioning means along the radial direction (A) of said system of polar coordinates, and said outlet-positioning means include first and second guide means (28, 25, 26), the first guide means (28) extending along an arc (B) centred on the second guide means (25, 26), the second guide means extending in said radial direction relative to the arc, for fine adjustment, with said screw actuator means, of the position in which the material falls on the spreading device.

2. A machine according to claim 1, comprising a second hopper (21) which is disposed beneath the hopper (3) for holding the material and has dimensions such that it collects all of the material supplied by falling from the holding hopper (3) in every adjustment position of the outlet (20) relative to the spreading device (4).

3. A machine according to claim 2, in which the positioning means comprise first and second elements (23, 24, 30) which support the second hopper (21) relative to the hopper (3) for holding the material and are fixed to the holding hopper (3) and to the second hopper (21), respectively, and in which the second guide means comprise a pair of slots (25, 26) which are formed in one and/or in the other (23, 24) of the support elements and are elongate radially relative to the arc (B), and the first guide means comprise a pin (12) centred on the arc and connecting the support elements to one another in the region of one (25) of the slots, and an arcuate slot (28) formed in one or the other (30) of the support elements in the region of one (26) of the other slots, as well as restraining means (31) for stopping the sliding and the pivoting of the support elements (23, 24) in the region of the arcuate slot (28),

4. A machine according to one of the preceding claims, in which said screw actuator means comprise a threaded rod (41) axially clamped relative to the hopper (3) and engaged by screwing in a section (36) connected to the outlet (20), a rotation of the threaded rod causing a relative sliding between the section (36) and the hopper (3) and consequently a movement of said outlet (20) along the radial axis (A).

## Patentansprüche

1. Streuer für körniges und/oder pulveriges Gut, insbesondere Dünger, mit einem Trichter (3) zur Aufnahme des zu verstreuenden Materials, der einen Auslass (20) für das Material und mindestens eine Zentrifugalstreueinrichtung (4) aufweist, die unterhalb des Trichters (3) angebracht ist, wobei der Auslass (20) relativ zu der Streuvorrichtung (4) bewegbar ist, um die Stellung, in der das Material auf die Streuvorrichtung (4) fällt und in Folge davon die Parameter der Verstreuung des Materials zu verändern, wobei der Auslass (20) relativ zur Streuvorrichtung entlang von mindestens zwei sich schneidenden Achsen (A-B) bewegbar ist und Auslasspositonierungsmittel vorgesehen sind, um den Auslass längs dieser mindestens zwei Achsen zu bewegen, wobei Schraubbetätigungsmittel in Wirkverbindung mit den Auslasspositionierungsmitteln stehen, um den Auslass entlang von mindestens einer der Achsen (A-B) durch die Rotation der Schraubbetätigungsmittel zu bewegen, **dadurch gekennzeichnet, dass** die Achsen (A-B) zu einem System von Polarkoordinaten gehören, dass die Schraubbetätigungsmittel in Wirkverbindung mit den Auslasspositionierungsmitteln längs der Radialrichtung des Polarkoordinatensystems verbunden sind, und dass die Auslasspositionierungsmittel mit ersten und zweiten Führungseinrichtungen (28, 25, 26) versehen sind und sich die ersten Führungsmittel (28) entlang eines Bogens (B) mit seinem Zentrum auf den zweiten Führungsmitteln (25, 26) erstrecken und sich die zweiten Führungsmittel in Radialrichtung zu dem Bogen erstrecken, zum Zweck einer Feineinstellung mit Hilfe der Schraubbetätigungsmittel der Lage in der das Material auf die Streueinrichtung fällt.

2. Streuer nach Anspruch 1, mit einem zweiten Trichter (21), der unterhalb des Trichters (3) zur Aufnahme des Materials angeordnet ist und solche Abmessungen aufweist, dass er das gesamte Material, das durch Herunterfallen von dem Aufnahmetrichter (3) geliefert wird, sammelt und zwar in jeder eingestellten Lage des Auslasses (20) relativ zu der Streuvorrichtung (4).

3. Streuer nach Anspruch 2, bei dem die Positionierungsmittel erste und zweite Elemente (23, 24, 30) umfassen, die den zweiten Trichter (21) relativ zum Trichter (3) für die Aufnahme des Materials tragen und die jeweils an dem Aufnahmetrichter (3) und an dem zweiten Trichter (21) befestigt sind und von denen die zweiten Führungsmittel ein Paar von Schlitzen (25, 26) aufweisen, die in einem der Tragelemente (23, 24) angeordnet sind und radial relativ zu dem Bogen (B) verlängert sind, wobei die ersten Führungsmittel einen Stift (12) aufweisen, der auf dem Bogen zentriert ist und die Tragelemente untereinander im Bereich eines (25) der Schlitze verbindet, wobei ein bogenförmiger Schlitz (28) in einem der Tragelemente (30) im Bereich eines (26) der anderen Schlitze vorgesehen ist, sowie Rückhaltemittel (31) zur Unterbindung der Gleit- und Schwenkbewegung der Tragelemente (23, 24) im Bereich des bogenförmigen Schlitzes (28).

4. Streuer nach einem der vorhergehenden Ansprüche, bei dem die Schraubbetätigungsmittel eine Gewindestange (41) umfassen, die axial relativ zum Trichter (3) geklemmt und durch eine Schraubverbindung in einem Bereich (36) mit einem Auslass (20) verbunden ist, so dass eine Rotation der Gewindestange eine relative Gleitbewegung zwischen dem Bereich (36) und dem Trichter (3) und folglich eine Bewegung des Auslasses (20) entlang der Radialachse (A) bewirken.

## Revendications

1. Machine d'épandage de matériaux sous forme granulaire et/ou de poudre, notamment d'engrais, du type qui comprend une trémie (3) destinée à contenir le matériau à épandre, comportant une sortie (20) du matériau, et au moins un dispositif centrifuge d'épandage (4) monté sous la trémie (3), la sortie (20) étant mobile par rapport au dispositif d'épandage (4) afin que la position à laquelle le matériau tombe sur le dispositif d'épandage (4) varie et, en conséquence, pour que les paramètres d'épandage du matériau soient ajustés, la sortie (20) étant mobile par rapport au dispositif d'épandage suivant au moins deux axes sécants (A, B), un dispositif de positionnement de sortie étant disposé afin qu'il déplace la sortie (20) le long des au moins deux axes (A, B), un dispositif à organe de manoeuvre de vis étant raccordé pendant le fonctionnement au dispositif de positionnement de sortie pour déplacer ladite sortie le long de l'un au moins des axes (A, B) par rotation dudit dispositif à organe de manoeuvre de vis, **caractérisé en ce que** les axes (A, B) appartiennent à un système de coordonnées polaires, ledit dispositif à organe de manoeuvre de vis est raccordé pendant le fonctionnement au dispositif de positionnement de sortie dans la direction radiale (A) du système de coordonnées polaires, et ledit dispositif de positionnement de sortie comprend un premier et un second dispositif de guidage (28, 25, 26), le premier dispositif de guidage (28) s'étendant suivant un arc (B) centré sur le second dispositif de guidage (25, 26), le second dispositif de guidage s'étendant en ladite direction radiale par rapport à l'arc, en vue de l'ajustement fin de la position à laquelle le matériau tombe sur le dispositif d'épandage.

2. Machine selon la revendication 1, comprenant une seconde trémie (21) qui est disposée sous la trémie (3) de retenue du matériau et qui a des dimensions telles qu'elle collecte tout le matériau transmis par chute depuis la trémie de retenue (3) dans toutes les positions d'ajustement de la sortie (20) par rapport au dispositif d'épandage (4).

3. Machine selon la revendication 2, dans lequel le dispositif de positionnement comprend un premier et un second élément (23, 24, 30) qui supportent la seconde trémie (21) par rapport à la trémie (3) de retenue du matériau et qui sont fixés à la trémie de retenue (3) et à la seconde trémie (21) respectivement, et dans laquelle le second dispositif de guidage comporte une paire de fentes (25, 26) qui sont formées dans l'un et/ou l'autre (23, 24) des éléments de support et sont allongées radialement par rapport à l'arc (B), et le premier dispositif de guidage comporte une broche (12) centrée sur l'arc et raccordant les éléments de support mutuellement dans la-région de l'une (25) des fentes, et une fente courbe (28) formée dans l'un ou l'autre (30) des éléments de support dans la région de l'une (26) des autres fentes, ainsi qu'un dispositif de restriction (31) destiné à empêcher le glissement et le pivotement des éléments de support (23, 24) dans la région de la fente courbe (28).

4. Machine selon l'une des revendications précédentes, dans laquelle ledit dispositif à organe de manoeuvre de vis comprend une tige filetée (41) serrée axialement par rapport à la trémie (3) et coopérant par vissage avec un tronçon (36) raccordé à la sortie (20), une rotation de la tige filetée provoquant un coulissement relatif entre le tronçon (36) et la trémie (3) et, en conséquence, un déplacement de ladite sortie (20) suivant l'axe radial (A).
